# EUROPÄISCHE PATENTSCHRIFT

(11) **EP 3 411 665 B1**
(45) Veröffentlichungstag und Bekanntmachung des Hinweises auf die Patenterteilung: **08.04.2020**
(21) Anmeldenummer: 17706689.1
(22) Anmeldetag: 01.02.2017
(51) Int. Cl.: G01C 21/36, B60Q 3/78, B60Q 3/80, B60Q 9/00

(54) **KRAFTFAHRZEUG**
MOTOR VEHICLE
VÉHICULE AUTOMOBILE

(30) Priorität: 03.02.2016 DE 102016001178
(43) Veröffentlichungstag der Anmeldung: 12.12.2018
(73) Patentinhaber: Audi AG, 85045 Ingolstadt (DE)
(72) Erfinder: KASTNER, Julia, 92339 Beilngries (DE); TONTSCH, Friedrich-Uwe, 85051 Ingolstadt (DE); BERLITZ, Stephan, 86529 Schrobenhausen (DE)
(86) Internationale Anmeldenummer: PCT/EP2017/052160
(87) Internationale Veröffentlichungsnummer: WO 2017/134111

(56) Entgegenhaltungen:
- EP-A1- 3 274 209
- DE-A1-102010 018 336
- DE-A1-102014 017 337
- US-A1- 2011 084 852

## Beschreibung

Die Erfindung betrifft ein Kraftfahrzeug, umfassend wenigstens ein linienförmiges Leuchtmittel zur direkten und/oder indirekten Beleuchtung eines Fahrzeuginnenraums, das sich zumindest abschnittsweise horizontal entlang wenigstens eines Bauteils des Kraftfahrzeugs erstreckt, und eine Positionserfassungseinheit zur Erfassung einer eine Position und eine Ausrichtung des Kraftfahrzeugs beschreibenden Egoinformation.

Kraftfahrzeuge mit linienförmigen Leuchtmitteln sind bekannt. Diese Leuchtmittel dienen typischerweise einer Ambiente-Beleuchtung, die vornehmlich der ästhetischen Aufwertung des Fahrzeuginnenraums und der Hervorhebung von Konturen des wenigstens einen Bauteils im Rahmen eines besonderen Designkonzepts dient.

Ebenso sind Navigationseinrichtungen für Kraftfahrzeuge bekannt, die einen Fahrer bei einer Fahrt zu einem eingegebenen Zielort unterstützen. Hierzu gibt die Navigationseinrichtung akustisch oder optisch an bestimmten Wegpunkten einer geplanten Route Fahranweisungen an einen Fahrer aus, die ihn beispielsweise anweisen, abzubiegen oder sich in eine bestimmte Spur einzuordnen. Die DE 10 2010 018 336 A1 offenbart Beleuchtungsvorrichtungen für ein Fahrzeug, die an einem Armaturenbrett und an einer Türinnenseite angeordnet sind und in Abhängigkeit von Signalen Anzeigefunktionen übernehmen, beispielsweise gemäß den Richtungsansagen des Navigationssystems. Die nachveröffentlichte EP 3 274 209 B1 offenbart eine Navigationshilfe mit einer visuellen Information, die die Richtung zu einem ortsfesten Punkt anzeigt. Dabei erhält der Fahrer zwar Hinweise, wie er das Kraftfahrzeug in der aktuellen Fahrsituation zu lenken hat, um der geplanten Route zu folgen, es fehlt ihm jedoch regelmäßig an einer Information, in welcher Richtung sich der Zielort befindet.

Der Erfindung liegt mithin die Aufgabe zugrunde, ein Kraftfahrzeug anzugeben, das eine verbesserte Orientierungsmöglichkeit für einen Insassen, insbesondere den Fahrer, während einer Navigationsführung realisiert bzw. eine Orientierungsmöglichkeit bereitstellt.

Diese Aufgabe wird erfindungsgemäß durch ein Kraftfahrzeug nach Anspruch 1 gelöst.

Die Erfindung beruht auf der Überlegung, das linienförmige Leuchtmittel aus mehreren Leuchtsegmenten zu bilden und wenigstens eines dieser Leuchtsegmente derart anzusteuern, dass ein Insasse des Kraftfahrzeugs, insbesondere der Fahrer, dadurch einen visuellen Hinweis auf die Richtung des Zielortes erhält. Dieser wenigstens eine Zielort ist ein Zielort einer laufenden Navigation der Navigationseinrichtung und/oder wenigstens ein aus einer Datenbank bereitgestellter Zielort für eine zukünftige Navigation, beispielsweise wenigstens ein zuletzt zur Navigation ausgewählter Zielort und/oder wenigstens ein favorisierter Zielort. Die Datenbank kann dabei in die Navigationseinrichtung integriert sein oder durch einen kraftfahrzeugexternen Server, insbesondere einen Internetserver, bereitgestellt werden. Die Steuereinrichtung ermittelt zunächst die die Richtung des wenigstens einen Zielorts bezüglich des Kraftfahrzeugs beschreibende Richtungsinformation in Abhängigkeit der durch die Egoinformation beschriebenen Ausrichtung des Kraftfahrzeugs und des durch die Ortsinformation beschriebenen wenigstens einen Zielorts. Als Ortsinformation liegt bevorzugt eine geodätische Koordinate des wenigstens einen Zielorts vor. Die Richtungsinformation kann beispielsweise als Azimutwinkel, insbesondere bezüglich der Fahrzeuglängsachse, ermittelt werden.

Aus dieser Richtungsinformation ermittelt die Steuereinrichtung sodann eine Untergruppe von wenigstens einem Leuchtsegment, mit dem die Richtung des Zielorts visualisierbar ist, bzw. mehrere Untergruppen von jeweils wenigstens einem Leuchtsegment, wobei mittels einer jeweiligen Untergruppe die Richtung eines von mehreren Zielorten visualisierbar ist. Eine Untergruppe kann eines oder mehrere der Leuchtsegmente umfassen. Die Steuereinrichtung ist dazu ausgebildet, das wenigstens eine Leuchtsegment dieser oder einer jeweiligen Untergruppe gemäß einer seine Leuchthelligkeit und/oder seine Leuchtfarbe vorgebenden Konfiguration anzusteuern. Diese kann für einen Insassen des Kraftfahrzeugs von der Leuchtfarbe und/oder der Leuchthelligkeit und/oder der Konfiguration weiterer Leuchtsegmente unterscheidbar sein und somit einen optischen Hinweis auf den wenigstens einen Zielort, also seine Visualisierung, ermöglichen. Leuchtsegmente, die nicht Teil einer gewählten Untergruppe sind, können mit einer vorgegebenen Leuchtfarbe und/oder Leuchthelligkeit betrieben werden, um insbesondere eine Ambiente-Beleuchtung bereitzustellen, oder deaktiviert werden.

Das linienförmige Leuchtmittel erstreckt sich vorzugsweise im Wesentlichen horizontal. Beispielsweise können wenigstens 70 Prozent oder wenigstens 90 Prozent seiner Linienlänge horizontal verlaufen. Der Verlauf des Leuchtmittel kann durch eine geringfügige Krümmung, deren Radius insbesondere größer als die Fahrzeugbreite ist, von der Horizontalen abweichen, um beispielsweise einer Kontur des Bauteils zu folgen. Die einzelnen Leuchtsegmente können jeweils ein Leuchtelement aufweisen oder aus einer Gruppe von gemeinsam gesteuerten Leuchtelementen bestehen. Auch ist es möglich, dass das Kraftfahrzeug mehrere der linienförmigen Leuchtmittel umfasst, die sich horizontal in Umfangsrichtung des Fahrzeuginnenraums zueinander benachbart oder voneinander beabstandet erstrecken. Als Leuchtelement kann beispielsweise eine RGB-LED genutzt werden, für die, insbesondere durch Pulsweitenmodulation, die Leuchtfarbe und/oder die Leuchthelligkeit vorgeben werden kann. Die Steuerung der Leuchthelligkeit und/oder der Leuchtfarbe kann durch eine Steuereinrichtung erfolgen, die dem Leuchtmittel zugeordnet ist, jedoch auch durch eine zentrale Steuereinrichtung, die mehrere Leuchtmittel steuert. Beispielsweise kann die Vorgabe der einzelnen Pulsweiten oder die Vorgabe eines Steuersignals zur Pulsweitenmodulation über einen Fahrzeugbus erfolgen.

Es ist auch denkbar, dass in oder an dem Kraftfahrzeug wenigstens ein Helligkeitssensor zur Erfassung der Umgebungshelligkeit vorgesehen ist, wobei die Helligkeit der Leuchtsegmente zusätzlich in Abhängigkeit der Umgebungshelligkeit steuerbar ist.

Die Steuereinrichtung kann als Navigationseinrichtung im Kraftfahrzeug ausgebildet oder Teil einer solchen sein. Zweckmäßigerweise basiert die Positionserfassungseinheit auf einer satellitengestützten Positionserfassung, beispielsweise GPS oder Galileo. Die Positionserfassungseinheit kann in die Navigationseinrichtung integriert sein.

Durch das erfindungsgemäße Kraftfahrzeug wird der Vorteil realisiert, dass bei herkömmlichen Kraftfahrzeugen lediglich zur Ambiente-Beleuchtung verwendete Leuchtmittel zusätzlich zur Informationsvermittlung an die Insassen des Kraftfahrzeugs genutzt werden können. Dazu wird die Aufteilung des Leuchtmittels in mehrere Leuchtsegmente zu der zuvor beschriebenen Visualisierung des Zielorts genutzt, so dass eine verbesserte Orientierungsmöglichkeit für einen Insassen des Kraftfahrzeugs realisiert oder eine Orientierung überhaupt erst ermöglicht wird.

Die Steuereinrichtung kann ferner dazu ausgebildet sein, einen Betriebsmodus der Navigationseinrichtung zu erfassen und bei einem eine laufende Navigation beschreibenden, aktiven Betriebsmodus ausschließlich die Richtung des Zielorts der laufenden Navigation zu visualisieren und/oder bei einem erfassten passiven Betriebsmodus ausschließlich wenigstens einen aus einer Datenbank der Navigationseinrichtung bereitgestellten, für eine durchzuführende Navigation anwählbaren Zielort zu visualisieren. Insbesondere führt die Navigationseinrichtung während des passiven Betriebsmodus keine Navigationsführung durch und/oder gibt keine Hinweise zur Navigationsführung aus. Der passive Betriebsmodus kann insbesondere unmittelbar nach einem Einschalten der Navigationseinrichtung vorliegen.

Die Steuereinrichtung kann ferner dazu ausgebildet sein, die Untergruppe in Abhängigkeit einer eine Position eines Insassen innerhalb des Kraftfahrzeugs beschreibenden Positionsinformation auszuwählen. Dazu kann die Steuereinrichtung beispielsweise Information über eine Sitzposition des Insassen bei der Auswahl der Untergruppe berücksichtigen, so dass eine perspektivisch korrekte Visualisierung des wenigstens einen Zielorts ermöglicht wird. Nachdem aus dem Stand der Technik bereits eine Vielzahl von Möglichkeiten bekannt ist, auch die Blickrichtung und/oder die Kopf- und/oder Augenposition des Insassen zu bestimmen, kann insbesondere vorgesehen sein, solche Informationen bei der Auswahl der Untergruppe zu berücksichtigen. Dazu kann das Kraftfahrzeug insbesondere eine wenigstens einen Insassen erfassende Kamera aufweisen.

Ergänzend oder alternativ kann die Steuereinrichtung dazu ausgebildet sein, in Abhängigkeit einer eine Entfernung des Kraftfahrzeugs zum Zielort beschreibenden Entfernungsinformation die Anzahl der Leuchtelemente der den Zielort visualisierende Untergruppe auszuwählen und/oder die Leuchthelligkeit und/oder die Leuchtfarbe der den Zielort visualisierenden Untergruppe vorzugeben. Die Entfernungsinformation kann durch die Steuereinrichtung aus der Egoinformation und der Ortsinformation ermittelt und/oder von der Navigationseinrichtung bereitgestellt werden. Die Entfernungsinformation kann eine Entfernung gemäß der Luftlinie und/oder gemäß der Streckenlänge einer Navigationsroute beschreiben. Wenn der Zielort ein Zielort einer laufenden Navigation ist, kann in Abhängigkeit eines Quotienten aus der Entfernung und einer bei Navigationsbeginn berechneten initialen Entfernung zum Zielort die Anzahl der Leuchtsegmente ausgewählt und/oder die Leuchthelligkeit und/oder die Leuchtfarbe vorgegeben werden. Analog dazu kann bei mehreren aus der Datenbank bereitgestellten Zielorten für eine zukünftige Navigation in Abhängigkeit eines Quotienten aus einer jeweiligen Entfernung und einer höchsten Entfernung aller zu visualisierenden Zielorte die Anzahl der Leuchtsegmente ausgewählt und/oder deren Leuchthelligkeit und/oder Leuchtfarbe vorgegeben werden. Für eine vorzugebenden Leuchtfarbe kann ein Farbverlauf definiert sein, innerhalb welchem die vorzugebende Leuchtfarbe in Abhängigkeit der Entfernung bzw. des Quotienten gewählt wird.

Bei dem erfindungsgemäßen Kraftfahrzeug kann zudem vorgesehen sein, dass das Bauteil ein Armaturenbrett und/oder eine Tür und/oder eine Karosseriesäule und/oder eine Mittelkonsole des Kraftfahrzeugs ist. Vorzugsweise können mehrere linienförmige Leuchtmittel genutzt werden, die an jeweils einem der Bauteile des Kraftfahrzeugs angeordnet sind. Beispielsweise können sich wenigstens ein Leuchtmittel entlang dem Armaturenbrett und jeweils eines der Leuchtmittel entlang der Türen des Kraftfahrzeugs erstrecken. Leuchtmittel können ausschließlich an den Vordertüren oder an den Vorder- und Hintertüren des Kraftfahrzeugs vorgesehen sein. Es kann eine zumindest abschnittsweise umlaufende Leuchtmittellinie realisiert werden, die einerseits eine Ambiente-Beleuchtung des Kraftfahrzeugs und andererseits die Visualisierung des wenigstens einen Zielorts ermöglicht.

Die horizontale Ausdehnung der Leuchtsegmente kann bei dem erfindungsgemäßen Kraftfahrzeug jeweils zwischen 2 mm und 100 mm sein. Die horizontale Ausdehnung kann insbesondere wenigstens 5 mm oder wenigstens 10 mm und/oder maximal 50 mm oder 30 mm sein. Die Breite des linienförmigen Leuchtmittels in vertikaler Richtung kann kleiner als 2 mm oder kleiner als 1 mm sein. Vorzugsweise kann die Breite 0,8 mm sein. Das Leuchtmittel kann einen gemeinsamen Diffusor für alle oder mehrere Diffusoren für die einzelnen Leuchtsegmente umfassen und/oder es kann derart im Kraftfahrzeug angeordnet sein, dass eine weitere Kraftfahrzeugkomponente zur indirekten Beleuchtung des Fahrzeuginnenraums angestrahlt wird.

Weitere Vorteile und Einzelheiten der Erfindung ergeben sich aus den folgenden Ausführungsbeispielen sowie anhand der Zeichnungen. Diese sind schematische Darstellungen und zeigen:
- Fig. 1: eine perspektivische Ansicht des Innenraums eines Ausführungsbeispiels eines erfindungsgemäßen Kraftfahrzeugs;
- Fig. 2: eine Prinzipdarstellung des in Fig. 1 gezeigten Kraftfahrzeugs mit den zur Steuerung von Leuchtmitteln relevanten Komponenten;
- Fig. 3: eine Detailansicht eines Leuchtmittels des in Fig. 1 gezeigten Kraftfahrzeug; und
- Fig. 4: das in Fig. 1 gezeigte Kraftfahrzeug in einer exemplarischen Fahrsituation.

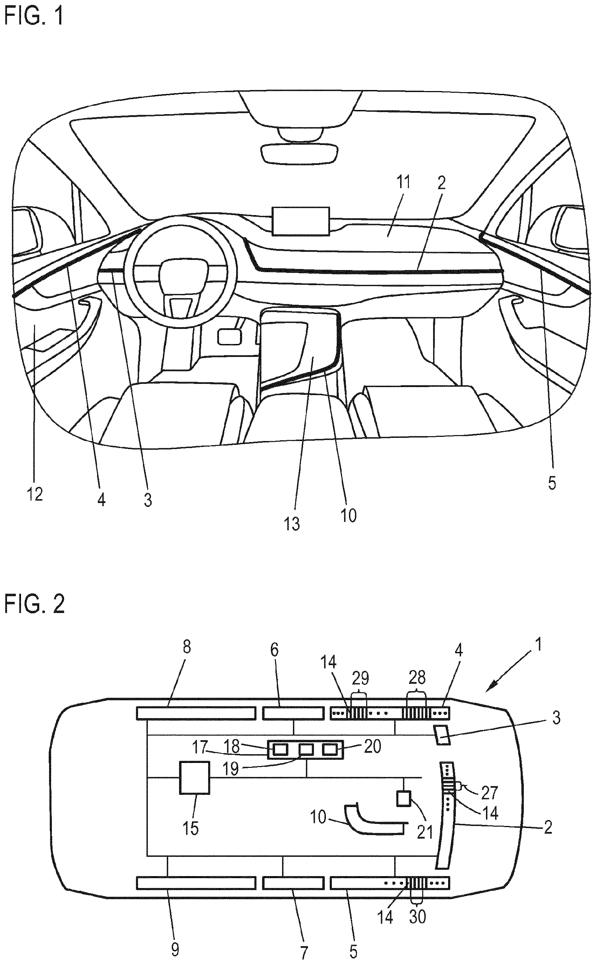

Fig. 1 und 2 zeigen unterschiedliche Ansichten eines Kraftfahrzeugs 1, wobei Fig. 1 schematisch eine perspektivische Darstellung des Innenraums des Kraftfahrzeugs 1 zeigt und Fig. 2 die für die folgende Erläuterung relevanten Komponenten und ihre Kommunikation darstellt. Das Kraftfahrzeug 1 weist mehrere linienförmige Leuchtmittel 2-10 auf, die zur direkten Beleuchtung des Fahrzeuginnenraums des Kraftfahrzeugs 1 dienen. In einem alternativen Ausführungsbeispiel wäre es möglich, ergänzend oder alternativ zu den Leuchtmitteln 2-10 zur direkten Beleuchtung linienförmige Leuchtmittel vorzusehen, die den Fahrzeuginnenraum indirekt beleuchten, indem sie weitere Kraftfahrzeugkomponenten, beispielsweise einen Stoffbezug einer Tür, anstrahlen. Die folgenden Ausführungen bezüglich der linienförmigen Leuchtmittel 2-10 zur direkten Beleuchtung lassen sich auch auf solche indirekt beleuchtenden Leuchtmittel übertragen.

Die Leuchtmittel 2-10 erstrecken sich jeweils zumindest abschnittsweise horizontal entlang verschiedener Bauteile des Kraftfahrzeugs 1. Die Leuchtmittel 2 und 3 erstrecken sich entlang des Armaturenbretts 11 und die Leuchtmittel 4 und 5 jeweils entlang einer Kontur der vorderen Fahrzeugtüren 12. Die Leuchtmittel 6 und 7 erstrecken sich horizontal in Verlängerung der Leuchtmittel 4 und 5 entlang der nicht gezeigten B-Säulen des Kraftfahrzeugs 1 und die Leuchtmittel 8, 9 setzen diese durch die Leuchtmittel 4 und 6 bzw. 5 und 7 gebildete Linie entlang der nicht gezeigten Hintertüren des Kraftfahrzeugs 1 fort. Die Leuchtmittel 2-9 bilden somit eine abgesehen von einigen Unterbrechungen im Wesentlichen den seitlichen und vorderen Umfang des Kraftfahrzeugs 1 umlaufende Leuchtlinie, um den Innenraum des Kraftfahrzeugs 1 zu beleuchten. Um die Konturen des Kraftfahrzeugs 1 weiter hervorzuheben, ist zusätzlich das linienförmige Leuchtmittel 10 vorgesehen, das sich entlang der Kontur der Mittelkonsole 13 des Kraftfahrzeugs 1 erstreckt.

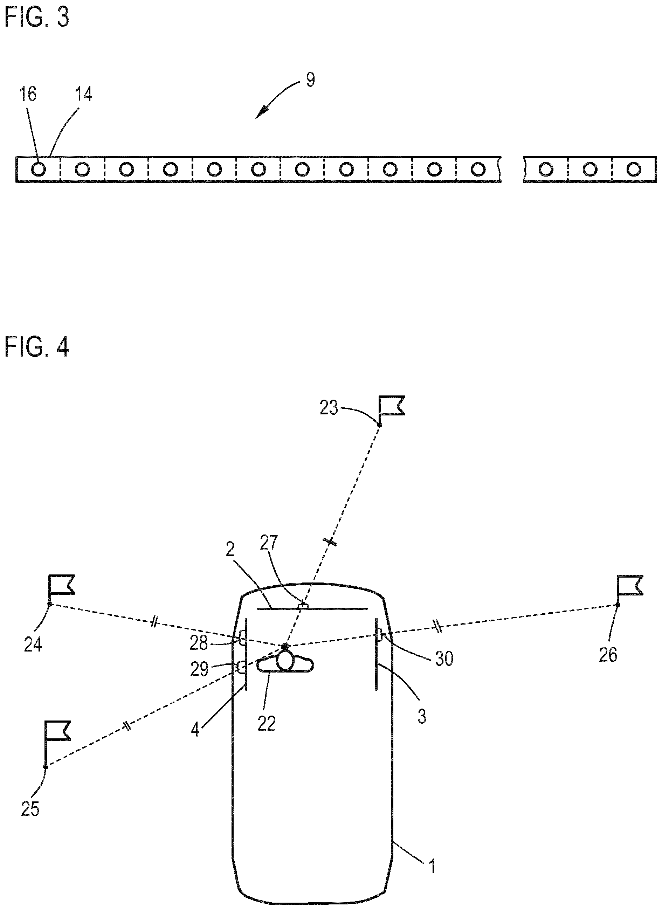

Eine Detaildarstellung der Leuchtmittel 2-10 ist am Beispiel des Leuchtmittels 9 in Fig. 3 gezeigt. Das Leuchtmittel 9 weist mehrere Leuchtsegmente 14 auf, die jeweils ein fest vorgegebenes Abstrahlprofil aufweisen und separat durch eine Steuereinrichtung 15 des Kraftfahrzeugs zur Vorgabe einer Leuchthelligkeit und/oder einer Leuchtfarbe der Leuchtsegmente 14 ansteuerbar sind. Die einzelnen Leuchtsegmente 14 weisen jeweils ein Leuchtelement 16 auf, das beispielsweise eine RGB-LED sein kann, dessen Leuchthelligkeit und/oder Leuchtfarbe durch die Steuereinrichtung 15 steuerbar sind. Zwischen den einzelnen Leuchtelementen 16 und dem Fahrzeuginnenraum ist ein nicht gezeigter Diffusor angeordnet, der das Licht der einzelnen Leuchtelemente 16 derart streut, dass bei einem Betrieb benachbarter Leuchtsegmente 14 in Horizontalrichtung eine im Wesentlichen homogene Leuchthelligkeit und Leuchtfarbe erreicht wird.

Wieder mit Bezug auf Fig. 2 weist das Kraftfahrzeug 1 eine Navigationseinrichtung 17 mit einer Positionserfassungseinheit 18, einer Datenbank 19 und einem Bedienelement 20 auf. Mittels der Positionserfassungseinheit 18 ist eine eine Position und eine Ausrichtung des Kraftfahrzeugs 1 in einem geodätischen Koordinatensystem beschreibende Egoinformation ermittelbar. Die Ermittlung der Egoinformation basiert dabei auf einem satellitengestützten Ortungsverfahren, wie GPS oder Galileo. In der Datenbank 19 sind geodätische Koordinaten mehrerer in der Vergangenheit angefahrener Zielorte sowie nutzerseitig vorgegebene favorisierte Zielorte abgelegt. In einem weiteren Ausführungsbeispiel ist die Datenbank 19 auf einem kraftfahrzeugexternen Internetserver abgelegt, auf den die Navigationseinrichtung 17 mittels einer nicht gezeigten kraftfahrzeugseitigen Kommunikationseinrichtung zugreift. Das Bedienelement 20 ist beispielsweise als Tastenfeld oder Touchscreen ausgebildet und in einem Gehäuse mit der Navigationseinrichtung 17 verbaut. In einem alternativen Ausführungsbeispiel ist es Teil einer zentralen Bedieneinheit, beispielsweise einer Lenkradbedieneinheit oder eines Dreh-Drück-Stellers, für die Navigationseinrichtung 17 und weitere Fahrzeugkomponenten.

Daneben umfasst das Kraftfahrzeug 1 eine Kamera 21, die seinen Innenraum erfasst und Bilddaten für die Steuereinrichtung 15 bereitstellt.

Fig. 4 zeigt das Kraftfahrzeug 1 in einer exemplarischen Fahrsituation, wobei ein Insasse 22 und vier Zielorte 23-26 in der Umgebung des Kraftfahrzeugs gezeigt sind. Dabei befindet sich die Navigationseinrichtung 17 zunächst in einem passiven Betriebsmodus, d.h. es findet aktuell keine laufende Navigationsführung statt. Anhand dieser Fahrsituation wird im Folgenden die Funktion der Steuereinrichtung 15 hinsichtlich der Visualisierung der Zielorte 23-26 erläutert:
Zunächst erfasst die Steuereinrichtung 15, dass sich die Navigationseinrichtung 17 im passiven Betriebsmodus befindet. Nachdem der Insasse 22 über das Bedienelement 20 einen Eingabedialog zur Vorgabe eines Zielorts für eine künftige Navigationsführung geöffnet hat, wird der Steuereinrichtung 15 aus der Datenbank 19 eine Ortsinformation bereitgestellt, die die geodätischen Koordinaten der Zielorte 23-26 beschreibt. Diese umfassen sowohl in der Vergangenheit angesteuerte Zielorte 23-26 wie auch durch den Insassen 22 als Favoriten gespeicherte Zielorte 23-26. Von der Positionserfassungseinheit 18 wird eine die Ausrichtung und Position des Kraftfahrzeugs 1 beschreibende Egoinformation an die Steuereinrichtung 15 bereitgestellt. Aus der Ortsinformation und der Egoinformation ermittelt die Steuereinrichtung 15 für jeden Zielort 23-26 jeweils eine seine Richtung bezüglich des Kraftfahrzeugs 1 beschreibende Richtungsinformation.

Anschließend wählt die Steuereinrichtung 15 für jeden Zielort 23-26 jeweils eine Untergruppe 27-30 (vgl. auch Fig. 2) von Leuchtsegmenten 14 des Leuchtmittels 2, 4, 5 derart aus, dass sie jene Leuchtsegmente umfasst, welche aus Sicht eines Insassen 22 auf dem Fahrersitz des Kraftfahrzeugs 1 perspektivisch korrekt die jeweilige Richtung der Zielorte 23-26 visualisieren. Dazu erhält die Steuereinrichtung 15 von der Kamera 21 Bilddaten des Insassen 22, aus denen sie durch Auswerten seiner Augenposition eine eine Position des Insassen des Kraftfahrzeugs 1 beschreibende Positionsinformation ableitet. Die Untergruppen 27-30 werden derart ausgewählt, dass wenigstens eines ihrer Leuchtsegmente 14 auf einem gedachten Strahl von der Position des Insassen in Richtung des Azimutwinkels des jeweiligen Zielorts 23-26 liegt.

Daneben wird der Steuereinrichtung 15 durch die Navigationseinrichtung 17 für jeden Zielort 23-26 eine seine Entfernung zum Kraftfahrzeug 1 beschreibende Entfernungsinformation bereitgestellt. Alternativ berechnet die Steuereinrichtung die Entfernungsinformationen aus der Egoinformation und der Ortsinformation selbst. Die Entfernungsinformationen beschreiben jeweils die Entfernung als Streckenlänge für die Navigationsführungen von der Position des Kraftfahrzeugs 1 zum jeweiligen Zielort 23-26. Alternativ dazu können die Entfernungsinformationen die Länge einer Luftlinie zu den Zielorten 23-26 beschreiben. Vorliegend ist der Zielort 23 am weitesten von der Position des Kraftfahrzeugs 1 entfernt, gefolgt vom Zielort 26 und dem Zielort 25, wobei der Zielort 24 am nächsten zum Kraftfahrzeug 1 gelegen ist.

Die Steuereinrichtung 15 wählt die Anzahl der Leuchtsegmente 14 der Untergruppen 27-30 jeweils in Abhängigkeit eines Quotienten der jeweiligen Entfernung zum Zielort 23-26 und der Entfernung zum Zielort 23 als am weitesten entfernten Zielort. Dabei ergibt sich aus einem geringen Quotienten eine hohe Anzahl von Leuchtsegmenten 14. Ein naher Zielort wird also durch eine größere Anzahl von Leuchtsegmenten 14 visualisiert als ein fernerer Zielort. Wie insbesondere aus Fig. 2 ersichtlich, wird als Anzahl der Leuchtsegmente 14 der Untergruppe 27 für den Zielort 23 zwei, als Anzahl der Leuchtsegmente 14 der Untergruppe 30 für den Zielort 26 drei, als Anzahl der Leuchtsegmente 14 der Untergruppe 29 für den Zielort 25 zu vier und als Anzahl der Leuchtsegmente 14 der Untergruppe 28 für den Zielort 24 fünf gewählt. Die jeweiligen Anzahlen sind dabei rein beispielhaft zu verstehen und hängen insbesondere von der genauen Beschaffenheit der Leuchtsegmente 14 bzw. der Leuchtelemente 16 und den Entfernungen der Zielorte 23-26 ab.

Die Steuereinrichtung 15 steuert die Leuchtsegmente 14 der Untergruppen 27-30 jeweils gemäß einer ihre Leuchthelligkeit und Leuchtfarbe vorgebenden Konfiguration an. Diese Konfiguration ermittelt die Steuereinrichtung 15 für jede Untergruppe 27-30 ebenfalls in Abhängigkeit der oben erläuterten Quotienten. Dabei wird für die die Richtung des den nächsten Zielort 24 visualisierende Untergruppe 28 wird eine stärkere Leuchthelligkeit vorgegeben, als für die die Richtung des fernsten Zielorts 23 visualisierende Untergruppe 27. In Abhängigkeit dieses Quotienten wird für jede Untergruppe 27-30 jeweils die Leuchtfarbe ihrer Leuchtsegmente 14 aus einem vorgegebenen Farbverlauf ausgewählt.

Mit einer Auswahl des Zielorts 23 für eine nun beginnende Navigationsführung durch den Insassen 22 mittels des Bedienelements 20 wechselt die Navigationseinrichtung in ein aktiven Betriebsmodus. Die Steuereinrichtung 15 steuert die Leuchtsegmente 14 aller Leuchtmittel 2-10 nun derart an, dass ausschließlich die Richtung des ausgewählten Zielort 23 visualisiert wird. In Abhängigkeit einer jeweiligen momentanen Entfernung des Kraftfahrzeugs 1 vom Zielort 23 wie die Anzahl der Leuchtsegmente 14 der Untergruppe 27 sowie deren Leuchthelligkeit und Leuchtfarbe angepasst. Dabei wird jedoch mit geringer werdender Entfernung zum Zielort 23 eine höhere Anzahl von Leuchtsegmenten 14 ausgewählt, so dass die bereits zurückgelegte Wegstrecke zum Zielort 23 zusätzlich visualisiert wird. Selbstverständlich kann in einem alternativen Ausführungsbeispiel mit geringer werdender Entfernung auch eine geringere Anzahl von Leuchtsegmenten 14 der Untergruppe 27 ausgewählt werden, wodurch zusätzlich eine verbliebene Reststrecke visualisiert wird.

## Patentansprüche

1. Kraftfahrzeug, umfassend wenigstens ein linienförmiges Leuchtmittel (2-10) zur direkten und/oder indirekten Beleuchtung eines Fahrzeuginnenraums, das sich zumindest abschnittsweise horizontal entlang wenigstens eines Bauteils des Kraftfahrzeugs (1) erstreckt und eine Positionserfassungseinheit (18) zur Erfassung einer eine Position und eine Ausrichtung des Kraftfahrzeugs (1) beschreibenden Egoinformation,
**dadurch gekennzeichnet,**
**dass** das Leuchtmittel (2-10) horizontal in mehrere Leuchtsegmente (14) unterteilt ist, die jeweils ein fest vorgegebenes Abstrahlprofil aufweisen, wobei das Kraftfahrzeug (1) eine Steuereinrichtung (15) aufweist, die dazu ausgebildet ist,
- aus einer durch eine Navigationseinrichtung (17) des Kraftfahrzeugs (1) bereitgestellten Ortsinformation, welche wenigstens einen Zielort (23-26) beschreibt, wobei der Zielort ein Zielort einer laufenden Navigation der Navigationseinrichtung (17) und/oder wenigstens ein aus einer Datenbank bereitgestellter Zielort für eine zukünftige Navigation ist, und der Egoinformation eine eine Richtung des Zielorts (23-26) bezüglich des Kraftfahrzeugs (1) beschreibende Richtungsinformation zu ermitteln,
- in Abhängigkeit der Richtungsinformation für den jeweiligen Zielort (23-26) eine wenigstens ein anzusteuerndes Leuchtsegment (14) umfassende Untergruppe (27-30) von Leuchtsegmenten (14) auszuwählen, und
- das jeweilige der Untergruppe (27-30) zugehörige Leuchtsegment (14) gemäß einer seine Leuchthelligkeit und/oder seine Leuchtfarbe vorgebenden, die Richtung des Zielorts (23-26) visualisierenden Konfiguration anzusteuern.

2. Kraftfahrzeug nach Anspruch 1,
**dadurch gekennzeichnet,**
**dass** die Steuereinrichtung ferner dazu ausgebildet ist, einen Betriebsmodus der Navigationseinrichtung (17) zu erfassen und bei einem eine laufende Navigation beschreibenden, aktiven Betriebsmodus ausschließlich die Richtung des Zielorts (23) der laufenden Navigation zu visualisieren und/oder bei einem erfassten passiven Betriebsmodus ausschließlich wenigstens einen aus einer Datenbank (19) der Navigationseinrichtung (17) bereitgestellten, für eine durchzuführende Navigation anwählbaren Zielort (23-26) zu visualisieren.

3. Kraftfahrzeug nach Anspruch 1 oder 2,
**dadurch gekennzeichnet,**
**dass** die Steuereinrichtung (15) ferner dazu ausgebildet ist, die Untergruppe (27-30) in Abhängigkeit einer eine Position eines Insassen (22) innerhalb des Kraftfahrzeugs (1) beschreibenden Positionsinformation auszuwählen.

4. Kraftfahrzeug nach einem der vorangehenden Ansprüche,
**dadurch gekennzeichnet,**
**dass** die Steuereinrichtung (15) ferner dazu ausgebildet ist, in Abhängigkeit einer eine Entfernung des Kraftfahrzeugs (1) zu dem Zielort (23-26) beschreibenden Entfernungsinformation die Anzahl der Leuchtelemente (14) der den Zielort (23-26) visualisierende Untergruppe (27-30) auszuwählen und/oder die Leuchthelligkeit und/oder die Leuchtfarbe der den Zielort (23-26) visualisierenden Untergruppe (27-30) vorzugeben.

5. Kraftfahrzeug nach einem der vorangehenden Ansprüche,
**dadurch gekennzeichnet,**
**dass** das Bauteil ein Armaturenbrett (11) und/oder eine Tür (12) und/oder eine Karosseriesäule und/oder eine Mittelkonsole (13) des Kraftfahrzeugs (1) ist.

6. Kraftfahrzeug nach einem der vorangehenden Ansprüche,
**dadurch gekennzeichnet,**
**dass** die horizontale Ausdehnung der Leuchtsegmente (14) jeweils zwischen 2 mm und 100 mm ist.

## Claims

1. Motor vehicle, comprising at least one linear lighting device (2-10) for directly and/or indirectly lighting an interior of a motor vehicle, which extends at least in sections horizontally along at least one component of the motor vehicle (1) and a position-sensing unit (18) for detecting ego information describing a position and an orientation of the motor vehicle (1),
**characterised in**
**that** the lighting device (2-10) is divided horizontally into a plurality of lighting segments (14) which each have a set radiation profile, wherein the motor vehicle (1) has a control device (15) which is designed
- to determine from location information provided by the navigation device (17) of the motor vehicle (1), which describes at least one destination (23-26), wherein the destination is a destination of a current navigation of the navigation device (17) and/or at least one destination provided from a database for future navigation, and ego information, direction information describing a direction of the destination (23-26) in relation to the motor vehicle (1),
- to select, in accordance with the direction information for the respective destination (23-26), a subgroup (27-30) of lighting segments (14) comprising at least one lighting segment (14) to be activated and
- to activate the respective lighting segment (14) belonging to the subgroup (27-30) according to a configuration specifying its lighting brightness and/or lighting colour and visualising the direction of the destination (23-26).

2. Method according to claim 1,
**characterised in**
**that** the control device is further configured to detect an operating mode of the navigation device (17) and in an active operating mode describing a current navigation to visualise exclusively the direction of the destination (23) of the current navigation and/or in a passive operating mode to visualise exclusively at least one destination (23-26) provided from a database (19) of the navigation device (17) and selectable for a navigation to be performed.

3. Method according to claim 1 or 2,
**characterised in**
**that** the control device (15) is further configured to select the subgroup (27-30) according to position information describing a position of a passenger (22) inside the motor vehicle (1).

4. Motor vehicle according to any of the preceding claims,
**characterised in**
**that** the control device (15) is further configured to select, according to distance information describing a distance of the motor vehicle (1) from the destination (23-26), the quantity of light elements (14) of the subgroup (27-30) visualising the destination (23-26) and/or to specify the brightness and/or colour of the light of the subgroup (27-30) visualising the destination (23-26).

5. Motor vehicle according to any of the preceding claims,
**characterised in**
**that** the component is a dashboard (11) and/or a door (12) and/or a body column and/or a central console (13) of the motor vehicle (1).

6. Motor vehicle according to any of the preceding claims,
**characterised in**
**that** the horizontal extension of the lighting segments (14) is between 2 mm and 100 mm respectively.

## Revendications

1. Véhicule automobile comprenant au moins un moyen d'éclairage linéaire (2-10) permettant l'éclairage direct et/ou indirect d'un habitacle de véhicule, qui s'étend au moins par endroits horizontalement le long d'au moins un composant du véhicule automobile (1), et une unité de détection de position (18) permettant de détecter une information spécifique décrivant une position et une orientation du véhicule automobile (1),
**caractérisé en ce que**,
le moyen d'éclairage (2-10) est divisé horizontalement en plusieurs segments d'éclairage (14) qui présentent respectivement un profil de rayonnement défini, le véhicule automobile (1) comportant un dispositif de commande (15) qui est conçu pour
- déterminer, à partir d'une information de localisation fournie par un système de navigation (17) du véhicule automobile (1) qui décrit au moins une destination (23-26), la destination étant une destination d'une navigation en cours du système de navigation (17) et/ou au moins une destination fournie à partir d'une base de données pour une future navigation, et
et à partir de l'information spécifique, une information de direction décrivant une direction de la destination (23-26) relative au véhicule automobile (1),
- sélectionner en fonction de l'information de direction pour chaque destination (23-26) un sous-ensemble (27-30) de segments d'éclairage (14) comprenant au moins un segment d'éclairage (14) à activer, et
- activer le segment d'éclairage respectif (14) appartenant au sous-ensemble (27-30) selon une configuration spécifiant sa luminosité et/ou sa couleur et visualisant la direction de la destination (23-26).

2. Véhicule automobile selon la revendication 1
**caractérisé en ce que**
le dispositif de commande est conçu en outre pour détecter un mode d'exploitation du système de navigation (17) et visualiser, dans le cas d'un mode d'exploitation actif décrivant une navigation en cours, exclusivement la direction de la destination (23) de la navigation en cours et/ou visualiser, dans le cas d'un mode d'exploitation passif détecté, exclusivement au moins une destination (23-26) sélectionnable pour une navigation à réaliser, fournie à partir d'une base de données (19) du système de navigation (17).

3. Véhicule automobile selon les revendications 1 ou 2,
**caractérisé en ce que**
le dispositif de commande (15) est de plus conçu pour sélectionner le sous-groupe (27-30) en fonction d'une information de position décrivant une position d'un passager (22) à l'intérieur du véhicule automobile (1).

4. Véhicule automobile selon l'une quelconque des revendications précédentes,
**caractérisé en ce que**
le dispositif de commande (15) est de plus conçu pour sélectionner, en fonction d'une information de distance décrivant une distance du véhicule automobile (1) par rapport à la destination (23-26), le nombre des éléments d'éclairage (14) du sous-groupe (27-30) visualisant la destination (23-26) et/ou définir la luminosité et/ou la couleur d'éclairage du sous-groupe (27-30) visualisant la destination (23-26).

5. Véhicule automobile selon l'une quelconque des revendications précédentes,
**caractérisé en ce que**
le composant est un tableau de bord (11) et/ou une porte (12) et/ou une colonne de carrosserie et/ou une console centrale (13) du véhicule automobile (1).

6. Véhicule automobile selon l'une quelconque des revendications précédentes,
**caractérisé en ce que**
le développement horizontal des segments d'éclairage (14) est respectivement compris entre 2 mm et 100 mm.
